(19) Europäisches Patentamt / European Patent Office / Office européen des brevets

(11) EP 4 443 588 A1

(12) **EUROPEAN PATENT APPLICATION**
published in accordance with Art. 153(4) EPC

(43) Date of publication:
**09.10.2024 Bulletin 2024/41**

(21) Application number: **22900282.9**

(22) Date of filing: **16.11.2022**

(51) International Patent Classification (IPC):
***H01M 10/0567*** *(2010.01)* ***H01M 10/0525*** *(2010.01)*

(52) Cooperative Patent Classification (CPC):
Y02E 60/10

(86) International application number:
**PCT/CN2022/132198**

(87) International publication number:
**WO 2023/098477 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2021 CN 202111447021**

(71) Applicant: **Shenzhen Capchem Technology Co., Ltd.**
**Shenzhen, Guangdong 518118 (CN)**

(72) Inventors:
- **DENG, Yonghong**
  **Shenzhen, Guangdong 518118 (CN)**
- **LIU, Zhongbo**
  **Shenzhen, Guangdong 518118 (CN)**
- **QIAN, Yunxian**
  **Shenzhen, Guangdong 518118 (CN)**
- **WANG, Yong**
  **Shenzhen, Guangdong 518118 (CN)**
- **HUANG, Xiong**
  **Shenzhen, Guangdong 518118 (CN)**

(74) Representative: **Herrero & Asociados, S.L.**
**Edificio Aqua - Agustín de Foxá, 4-10**
**28036 Madrid (ES)**

(54) **LITHIUM-ION BATTERY**

(57) In order to overcome the problems of insufficient fast charge performance, insufficient high-temperature storage performance and increased high-temperature cyclic impedance, the application provides a lithium ion battery, which comprises a positive electrode with a positive electrode material layer, a negative electrode with a negative electrode material layer, and a non-aqueous electrolyte, wherein the positive electrode material layer comprises a lithium transition metal oxide containing magnesium as a positive electrode active material, the negative electrode material layer comprises a negative electrode active material and a magnesium-containing compound, and the non-aqueous electrolyte comprises a carboxylate solvent, an electrolyte salt and a compound represented by structural formula 1:

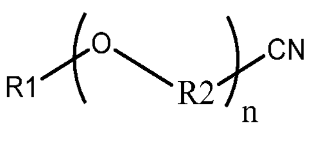

Structural formula 1

wherein R1 is selected from an unsaturated hydrocarbon group with 3-6 carbon atoms, R2 is selected from an alkylene group with 2-5 carbon atoms, and n is 1 or 2; the lithium ion battery satisfies the following conditions:

$$0.002 \leq m/x \leq 0.25 \text{ and } 0.001 \leq m/z \leq 0.1.$$

EP 4 443 588 A1

## Description

### Technical field

The application belongs to the technical field of energy storage battery devices, and particularly relates to a lithium ion battery.

### Background

Lithium-ion battery has the advantages of high working voltage, wide working temperature range, high energy density and power density, no memory effect and long cycle life. It has been widely used in the fields of 3C digital products such as mobile phones and notebook computers and new energy vehicles. In recent years, with the continuous development of thin and light 3C digital products, the battery industry has higher and higher requirements for high energy density of lithium-ion batteries. At the same time, fast charge has become the basic requirement of batteries for users. Therefore, it is urgent to improve the energy density and fast charge performance of lithium-ion batteries.

At present, the main methods to improve the energy density of batteries are as follows: 1. Increase the cut-off voltage of positive electrode charging. 2. The active material layer of the electrode is pressurized to achieve high density, so that the space occupied by the active material in the battery is reduced as much as possible. However, with the increase of the cut-off voltage of the positive electrode, the activity of the positive electrode is further improved, the side reaction between the positive electrode and electrolyte is intensified, and the transition metal ions of the positive electrode are dissolved out, resulting in excessive loss of high-temperature storage capacity and poor performance of battery. In addition, when using high compaction density electrode, due to the low porosity of the high compaction density electrode, the liquid retention capacity of battery would also decrease, and it is difficult for electrolyte to penetrate at the interface of electrode sheet with low porosity, which makes the contact internal resistance between electrolyte and electrode increase. During the long cycle, the polarization of charge and discharge becomes larger, which may lead to a sudden and significant decrease in battery capacity due to lithium precipitation. Therefore, it is a difficult problem to improve the high-temperature performance of high compaction density and high-voltage lithium-ion batteries while restraining the impedance growth in the cycle process.

At present, there are two methods commonly used in electrolyte. One is to use nitrile or other high-voltage additives to strengthen the protection of the positive electrode under high voltage, but nitrile additives would deteriorate the battery impedance during cycle, resulting in poor fast charge performance and increased polarization in the later cycle, which leads to poor long-cycle performance of battery. The other is to add additives to promote cycle process and reduce impedance, such as FEC, which would reduce the battery impedance and improve the cycle life of battery, but would reduce the high-temperature stability of battery, resulting in poor high-temperature performance of electrolyte, and gas expansion during high-temperature storage, etc. In some cases, carboxylate solvents may be adopted, which have the advantages of wide liquid range, low viscosity and high conductivity, and can greatly improve the fast charge performance of battery. However, the stability of carboxylate is worse than that of linear carbonate, and it is likely to have side reactions with the positive electrode during cycle. Hence, the side reaction products migrate to the negative electrode and are reduced at the negative electrode, resulting in a rapid increase in cycle impedance. Besides, carboxylate would cause gas production problem during high-temperature storage. Therefore, how to ensure both the long-term fast charge cycle performance and high-temperature storage performance of battery is a major topic in the research of high-voltage and high compaction density lithium-ion batteries.

### Summary of the invention

Aiming at the problems of insufficient fast charge cycle performance, increased high-temperature cycle impedance and poor high-temperature storage performance of the existing lithium ion battery, the application provides a lithium ion battery.

The technical solution adopted by the application to solve the technical problems is as follows.

The application provides a lithium ion battery, which comprises a positive electrode containing a positive electrode material layer, a negative electrode containing a negative electrode material layer, and a non-aqueous electrolyte, wherein the positive electrode material layer comprises a lithium transition metal oxide containing magnesium as a positive electrode active material, the negative electrode material layer comprises a negative electrode active material and a magnesium-containing compound, and the non-aqueous electrolyte comprises a carboxylate solvent, an electrolyte salt and a compound represented by structural formula 1:

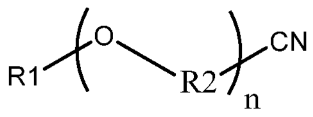

Structural formula 1

wherein R1 is selected from an unsaturated hydrocarbon group with 3-6 carbon atoms, R2 is selected from an alkylene group with 2-5 carbon atoms, and n is 1 or 2;
the lithium ion battery satisfies the following conditions:

$$0.002 \leq m/x \leq 0.25 \text{ and } 0.001 \leq m/z \leq 0.1;$$

wherein, x is a mass percentage of carboxylate in the non-aqueous electrolyte, and the unit is %;
m is a mass percentage of the compound represented by structural formula 1 in the non-aqueous electrolyte, and the unit is %;
z is a mass content of element Mg relative to the negative electrode material layer, and the unit is ppm.

Optionally, the lithium ion battery satisfies the following conditions:

$$0.005 \leq m/x \leq 0.1 \text{ and } 0.001 \leq m/z \leq 0.02.$$

Optionally, the compound represented by structural formula 1 is selected from one or more of the following compounds:

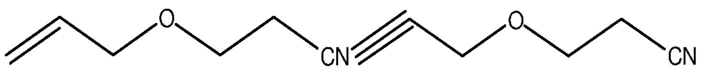

Compound 1 Compound 2

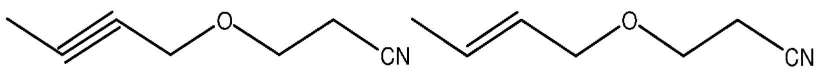

Compound 3 Compound 4

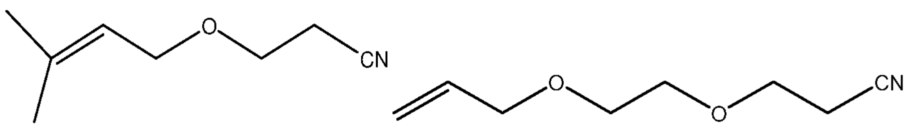

Compound 5 Compound 6

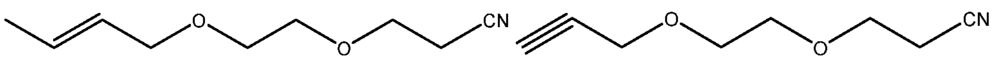

Compound 7Compound 8.

Optionally, the mass percentage (m) of the compound represented by structural formula 1 in the non-aqueous electrolyte is 0.1-5%.
Preferably, the mass percentage (m) of the compound represented by structural formula 1 in the non-aqueous electrolyte is 0.1-2%.
Optionally, the mass content (z) of element Mg relative to the negative electrode material layer is 5-500ppm.
Preferably, the mass content (z) of element Mg relative to the negative electrode material layer is 50-500ppm.
Optionally, the mass percentage (x) of carboxylate in the non-aqueous electrolyte is 5-55%.
Preferably, the mass percentage (x) of carboxylate in the non-aqueous electrolyte is 10-40%.
Optionally, the carboxylate is at least one selected from methyl acetate, ethyl acetate, ethyl propionate, butyl

acetate, propyl propionate, butyl propionate, γ-butyrolactone, γ-valerolactone and δ-valerolactone.

Optionally, the compaction density of the negative electrode material layer is greater than or equal to 1.5g/cm$^3$; preferably, the compaction density of the negative electrode material layer is 1.55-1.9g/cm$^3$.

Optionally, the non-aqueous electrolyte further comprises a supplemental additive, and the supplemental additive comprises at least one of cyclic sulfate compound, sultone compound, cyclic carbonate compound, unsaturated phosphate compound and nitrile compound.

Preferably, an addition amount of the supplemental additive is 0.01%-30% based on the total mass of the non-aqueous electrolyte being 100%.

Optionally, the cyclic sulfate compound is selected from at least one of ethylene sulfate, propylene sulfate or methyl ethylene sulfate;

the sultone compound is selected from one or more of 1,3-propane sultone, 1,4-butane sultone, and 1,3-propene sultone; and

the cyclic carbonate compound is selected from at least one of vinylene carbonate, vinylethylene carbonate, fluoroethylene carbonate or a compound represented by structural formula 2;

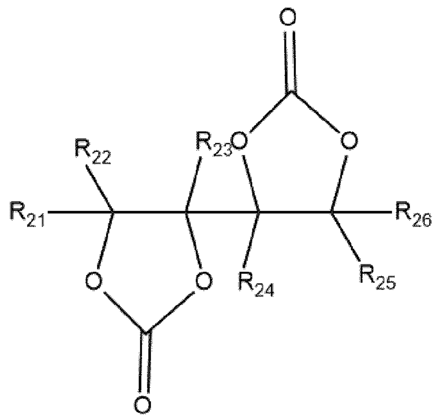

Structural formula 2

in structural formula 2, $R_{21}$, $R_{22}$, $R_{23}$, $R_{24}$, $R_{25}$ and $R_{26}$ are each independently selected from one of hydrogen atom, halogen atom and C1-C5 group;

the unsaturated phosphate compound is selected from at least one compound represented by structural formula 3:

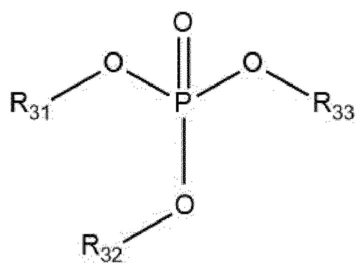

Structural formula 3

in structural formula 3, $R_{31}$, $R_{32}$ and $R_{33}$ are each independently selected from a C1-C5 saturated hydrocarbon group, a C1-C5 unsaturated hydrocarbon group, a C1-C5 halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group; and

the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

The inventors of the present application have found through research that in the aspect of electrolyte, the compound represented by structural formula 1 can effectively protect the positive electrode, alleviate the oxidation reaction between the carboxylate solvent and the positive electrode, and ensure the fast charge and cycle performance

of battery. As for the negative electrode, Mg in the negative electrode is able to adjust the formation mode of the SEI film generated by the compound represented by structural formula 1 on the negative electrode. On the one hand, Mg participates in the formation of the SEI film, and the thickness of the obtained SEI film is reduced, thus avoiding the problem of excessive impedance caused by the excessive thickness of the SEI film. On the other hand, the formed SEI film containing Mg has high conductivity, which can reduce the charge transfer impedance of the negative electrode, thus reducing the overpotential of Li+ intercalation and deintercalation reactions in the charging and discharging process. Therefore, it can effectively inhibit the impedance growth rate in the cycle process, thereby improving the high-temperature cycle performance and storage performance of battery. Especially, when the mass content (z) of element Mg in the negative electrode material layer, the mass content (m) of the compound represented by structural formula 1 and the carboxylate content x satisfy $0.002 \leq m/x \leq 0.25$ and $0.001 \leq m/z \leq 0.1$, the battery can be guaranteed to have good fast charge cycle performance on the premise of maintaining excellent high-temperature storage performance.

## Detailed description of the application

In order to make the technical problems to be solved, technical solutions and beneficial effects of the present application clearer, the present application will be further described in detail with reference to the following embodiments. It should be understood that the specific embodiments described herein are only used to explain the present application, not intended to limit the present application.

The embodiment of the application provides a lithium ion battery, which comprises a positive electrode, a negative electrode and a non-aqueous electrolyte.

The positive electrode consists of an positive electrode current collector and an positive electrode material layer formed on the positive electrode current collector. The positive current collector is selected from metal materials that can conduct electrons. Preferably, the positive current collector includes one or more of Al, Ni, tin, copper and stainless steel. In a more preferred embodiment, the positive current collector is selected from aluminum foil. The cathode material layer includes magnesium-containing lithium transition metal oxide as a cathode active material, a cathode binder and a cathode conductive agent.

The positive active material includes lithium transition metal oxide containing magnesium. Specifically, the cathode active material can be selected from one or more of LiFe1-x'Mgx'PO4, LiMn2-y'Mgy'O4 and LiNixCoyMnzMg1-x-y-zO2, wherein $0 \leq x' < 1$, $0 \leq y' \leq 1$, $0 \leq y \leq 1$, $0 \leq x \leq 1$, $0 \leq z \leq 1$, $x+y+z \leq 1$. The positive electrode active material contains magnesium, so that the stability of the positive electrode active material can be improved, and at the same time, a small amount of element Mg of the positive electrode active material can be dissolved out and migrated into the negative electrode material layer during the charge and discharge cycle, and the negative electrode material layer containing element Mg is obtained.

The cathode binder can be selected from polyvinylidene fluoride, copolymer of vinylidene fluoride, polytetrafluoroethylene, copolymer of vinylidene fluoride-hexafluoropropylene, copolymer of tetrafluoroethylene-hexafluoropropylene, copolymer of tetrafluoroethylene-perfluoroalkyl vinyl ether, copolymer of ethylene-tetrafluoroethylene, copolymer of vinylidene fluoride-tetrafluoroethylene, copolymer of vinylidene fluoride-trifluoroethylene, copolymer of vinylidene fluoride-trichloroethylene, and copolymer of vinylidene fluoride-trichloroethylene; acrylic resin; and one or more of styrene butadiene rubber.

The positive electrode conductive agent can be selected from one or more of metal conductive agent, carbon-based material, metal oxide conductive agent and composite conductive agent. Specifically, the metal conductive agent can be copper powder, nickel powder, silver powder and other metals; The carbon-based materials can be carbon-based materials such as conductive graphite, conductive carbon black, conductive carbon fiber or graphene; The metal oxide conductive agent can be tin oxide, iron oxide, zinc oxide, etc. The composite conductive agent can be composite powder, composite fiber, etc. More specifically, the conductive carbon black can be one or more of acetylene black, 350G, Cochin black, carbon fiber (VGCF) and carbon nanotubes (CNTs).

The cathode comprises a cathode current collector and a cathode material layer formed on the cathode current collector.

The negative current collector is selected from metal materials that can conduct electrons. Preferably, the negative current collector includes one or more of Al, Ni, tin, copper and stainless steel. In a more preferred embodiment, the negative current collector is selected from aluminum foil.

The negative electrode material layer comprises a negative electrode active material, a magnesium-containing compound, a negative electrode binder and a negative electrode conductive agent.

The negative electrode active material includes one or more of a silicon-based negative electrode and a carbon-based negative electrode. The carbon-based cathode may include graphite, hard carbon, soft carbon, graphene, mesophase carbon microspheres and the like. The graphite includes but is not limited to one or more of natural graphite, artificial graphite, amorphous carbon, carbon-coated graphite, graphite-coated graphite and resin-coated graphite. The silicon-based cathode may include silicon material, silicon oxide, silicon-carbon composite material, silicon alloy material

and the like. The addition amount of the silicon-based material is more than 0 and less than 30%. Preferably, the upper limit of the addition amount of the silicon-based material is 10%, 15%, 20% or 25%; The lower limit of the addition amount of the silicon-based material is 5%, 10% or 15%. The silicon material is one or more of silicon nanoparticles, silicon nanowires, silicon nanotubes, silicon films, 3D porous silicon and hollow porous silicon.

The negative electrode binder is selected from polyvinylidene fluoride, copolymer of vinylidene fluoride, polytetrafluoroethylene, copolymer of vinylidene fluoride-hexafluoropropylene, copolymer of tetrafluoroethylene-hexafluoropropylene, copolymer of tetrafluoroethylene-perfluoroalkyl vinyl ether, copolymer of ethylene-tetrafluoroethylene, copolymer of vinylidene fluoride-tetrafluoroethylene, copolymer of vinylidene fluoride-trifluoroethylene, copolymer of vinylidene fluoride-trichloroethylene and vinylidene fluoride-fluorine. Acrylic resin; Sodium hydroxymethylcellulose; And one or more of styrene butadiene rubber.

The negative electrode conductive agent is selected from one or more of conductive carbon black, conductive carbon spheres, conductive graphite, conductive carbon fibers, carbon nanotubes, graphene or reduced graphene oxide.

The non-aqueous electrolyte comprises a carboxylate solvent, an electrolyte salt and a compound represented by structural formula 1:

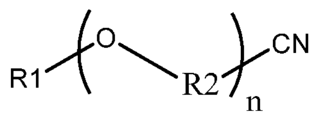

Structural formula 1

wherein R1 is selected from an unsaturated hydrocarbon group with 3-6 carbon atoms, R2 is selected from an alkylene group with 2-5 carbon atoms, and n is 1 or 2;

the lithium ion battery satisfies the following conditions:

$$0.002 \leq m/x \leq 0.25 \text{ and } 0.001 \leq m/z \leq 0.1;$$

wherein, x is a mass percentage of carboxylate in the non-aqueous electrolyte, and the unit is %;

m is a mass percentage of the compound represented by structural formula 1 in the non-aqueous electrolyte, and the unit is %;

z is a mass content of element Mg relative to the negative electrode material layer, and the unit is ppm.

The inventors of the present application have found through research that in the aspect of electrolyte, the compound represented by structural formula 1 can effectively protect the positive electrode, alleviate the oxidation reaction between the carboxylate solvent and the positive electrode, and ensure the fast charge and cycle performance of battery. As for the negative electrode, Mg in the negative electrode is able to adjust the formation mode of the SEI film generated by the compound represented by structural formula 1 on the negative electrode. On the one hand, Mg participates in the formation of the SEI film, and the thickness of the obtained SEI film is reduced, thus avoiding the problem of excessive impedance caused by the excessive thickness of the SEI film. On the other hand, the formed SEI film containing Mg has high conductivity, which can reduce the charge transfer impedance of the negative electrode, thus reducing the overpotential of $Li+$ intercalation and deintercalation reactions in the charging and discharging process. Therefore, it can effectively inhibit the impedance growth rate in the cycle process, thereby improving the high-temperature cycle performance and storage performance of battery.

Especially, when the mass content (z) of element Mg in the negative electrode material layer, the mass content (m) of the compound represented by structural formula 1 and the carboxylate content (x) satisfy the conditions of $0.002 \leq m/x \leq 0.25$ and $0.001 \leq m/z \leq 0.1$, the battery can be guaranteed to have good fast charge cycle performance on the premise of maintaining excellent high-temperature performance.

In a preferred embodiment, the lithium ion battery satisfies the following conditions:

$$0.005 \leq m/x \leq 0.1 \text{ and } 0.001 \leq m/z \leq 0.02.$$

In the lithium ion battery provided by the application, the compound represented by structural formula 1 is associated with the mass content (z) of element Mg in the negative electrode material layer and the mass percentage content of carboxylate in the non-aqueous electrolyte, so that the influences of the negative electrode, carboxylate and the compound represented by structural formula 1 on the battery performance can be balanced to a certain extent. Thus,

obtaining a lithium ion battery with good fast charge and cycle performance and excellent high-temperature performance.

In some embodiments, the compound represented by structural formula 1 is selected from one or more of the following compounds:

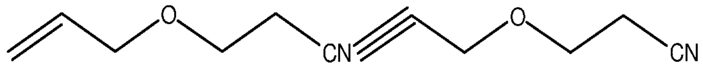

Compound 1 Compound 2

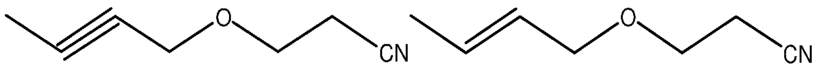

Compound 3 Compound 4

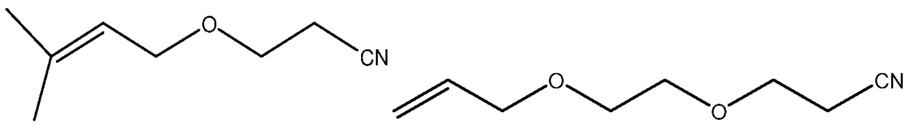

Compound 5 Compound 6

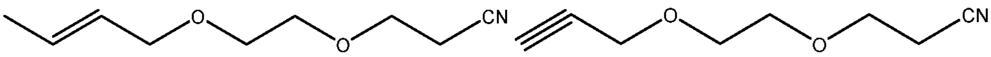

Compound 7Compound 8.

In some embodiments, the mass percentage (m) of the compound represented by structural formula 1 in the non-aqueous electrolyte is 0.1-5%.

In a preferred embodiment, the mass percentage (m) of the compound represented by structural formula 1 in the non-aqueous electrolyte is 0.1-2%.

During the cycle of the battery, the positive electrode is in a state of strong oxidation, which is easy for the electrolyte to undergo oxidation reaction, resulting in the decomposition of the electrolyte. The generated oxidation products would migrate to the interface of the negative electrode, be reduced on the surface of the negative electrode, and consume active lithium. By adding the compound represented by structural formula 1, the reaction between the non-aqueous electrolyte and the positive active material can be effectively suppressed, and the positive reaction product can be inhibited from migrating to the negative electrode to react, thus reducing the loss of active lithium of the battery.By adding the compound shown in structural formula 1, the reaction between non-aqueous electrolyte and positive active material can be effectively inhibited, and the positive reaction product can be inhibited from migrating to the negative electrode to react, thus reducing the loss of active lithium of the battery. However, the addition amount of the compound represented by structural formula 1 should not be too large, because the initial impedance of the SEI film formed by the negative electrode of the battery is large, which will increase the battery impedance, and excessive addition of the compound represented by structural formula 1 would increase the viscosity of the electrolyte and reduce the conductivity, which is not conducive to the cycle performance of battery.

In some embodiments, the mass content (z) of element Mg relative to the negative electrode material layer is 5-500 ppm.

In a preferred embodiment, the mass content (z) of element Mg relative to the negative electrode material layer is 50-500ppm.

It should be noted that the negative electrode material layer in this application refers to the part of the negative electrode except the negative electrode current collector, and the parameter "z" defines the content of Mg in the negative electrode material layer. The element Mg in the negative electrode material layer may come from extra addition when preparing the negative electrode material layer, or the Mg metal ions from the positive electrode active material may be dissolved out. For example, element Mg in the positive electrode active material may be partially ionized by charging and discharging, and then migrate to the negative electrode material layer for precipitation. Specifically, element Mg in the negative electrode material layer exists in the form of a simple substance or a compound.

Element Mg in the negative electrode material layer is beneficial to solve the problem of large initial impedance of the SEI film formed by the compound represented by structural formula 1. When the mass content (z) of element Mg in the negative electrode material layer is too low, it is difficult to reduce the thickness of the SEI film. When the mass content (z) of element Mg in the positive electrode material layer is too high, the energy density of the positive electrode

would be reduced, which would affect the intercalation and deintercalation of electrolyte ions.

In some embodiments, the mass percentage (x) of carboxylate in the non-aqueous electrolyte is 5-55%.

In a preferred embodiment, the mass percentage (x) of carboxylate in the non-aqueous electrolyte is 10-40%.

By adding carboxylate as a solvent to the non-aqueous electrolyte, the fast charge performance of battery can be improved, but excessive addition of carboxylate would reduce the stability of the non-aqueous electrolyte, thus affecting the cycle performance of battery.

In some embodiments, the carboxylate is at least one selected from methyl acetate, ethyl acetate, ethyl propionate, butyl acetate, propyl propionate, butyl propionate, γ-butyrolactone, γ-valerolactone and δ-valerolactone.

In some embodiments, the non-aqueous electrolyte further comprises a supplemental additive, and the supplemental additive comprises at least one of cyclic sulfate compound, sultone compound, cyclic carbonate compound, unsaturated phosphate compound and nitrile compound.

Preferably, the cyclic sulfate compound is selected from at least one of ethylene sulfate, propylene sulfate or methyl ethylene sulfate;

the sultone compound is selected from one or more of 1,3-propane sultone, 1,4-butane sultone, and 1,3-propene sultone; and
the cyclic carbonate compound is selected from at least one of vinylene carbonate, vinylethylene carbonate, fluoroethylene carbonate or a compound represented by structural formula 2;

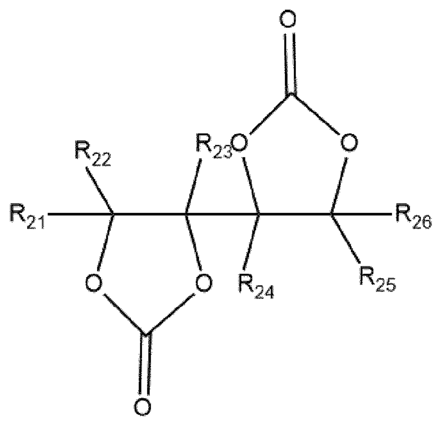

Structural formula 2

in structural formula 2, $R_{21}$, $R_{22}$, $R_{23}$, $R_{24}$, $R_{25}$ and $R_{26}$ are each independently selected from one of hydrogen atom, halogen atom and C1-C5 group;
the unsaturated phosphate compound is selected from at least one compound represented by structural formula 3:

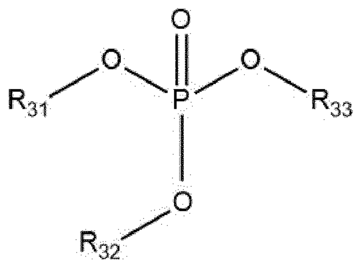

Structural formula 3

in structural formula 3, $R_{31}$, $R_{32}$ and $R_{33}$ are each independently selected from a C1-C5 saturated hydrocarbon group, a C1-C5 unsaturated hydrocarbon group, a C1-C5 halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group.

In a preferred embodiment, the unsaturated phosphate compounds may be at least one selected from the group consisting of phosphoric acid tripropargyl ester, dipropargyl methyl phosphonate, dipropargyl ethyl phosphate,

dipropargyl propyl phosphate,dipropargyl trifluoromethyl phosphate, dipropargyl-2, 2, 2-trifluoroethyl phosphate, dipropargyl-3, 3, 3-trifluoropropyl phosphate, dipropargyl hexafluoroisopropyl phosphate, phosphoric acid triallyl ester, diallyl methyl phosphate, diallyl ethyl phosphate, diallyl propyl phosphate, diallyl trifluoromethyl phosphate, diallyl-2 , 2 , 2-trifluoroethyl phosphate, diallyl-3, 3, 3-trifluoropropyl phosphate or diallyl hexafluoroisopropyl phosphate.

The nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

In other embodiments, the supplemental additive may also include other additives that can improve the performance of battery. For example, additives that can improve the safety performance of battery, specifically, flame retardant additives such as fluorophosphate and cyclophosphazene, or anti-overcharge additives such as tert-amyl benzene and tert-butyl benzene.

In some embodiments, the addition amount of the supplemental additive is 0.01%-30% based on the total mass of the non-aqueous electrolyte.

It should be noted that, unless otherwise specified, in general, the addition amount of any optional substance of the supplemental additive in the non-aqueous electrolyte is less than 10%, preferably 0.1-5%, and more preferably 0.1%-2%. Specifically, the addition amount of any optional substance in the supplemental additive may be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5% and 10%.

In some embodiments, when the supplemental additive is selected from fluoroethylene carbonate, the addition amount of the fluoroethylene carbonate is 0.05%-30% based on the total mass of the non-aqueous electrolyte.

In some embodiments, the electrolyte salt is selected from $LiPF_6$, $LiPO_2F_2$, $LiBF_4$, LiBOB, $LiSbF_6$, $LiAsF_6$, $LiCF_3SO_3$, LiDFOB, $LiN(SO_2CF_3)_2$, $LiC(SO_2CF_3)_3$, $LiN(SO_2C_2F_5)_2$, $LiN(SO_2F)_2$, LiCl, LiBr, LiI, $LiClO_4$, $LiBF_4$, $LiB_{10}Cl_{10}$, $LiAlCl_4$, lithium chloroborane, lithium lower aliphatic carboxylate with less than 4 carbon atoms, lithium tetraphenylborate and lithium imino. Specifically, the electrolyte salt may be inorganic electrolyte salts such as $LiBF_4$, $LiClO_4$, $LiAlF_4$, $LiSbF_6$, $LiTaF_6$, $LiWF_7$, etc; electrolyte salts of fluorophosphoric acid such as $LiPF_6$, etc; electrolyte salts of carboxylic acid such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, $CF_3CF_2CF_2CF_2CO_2Li$, etc; electrolyte salts of sulfonic acid such as $CH_3SO_3Li$, etc; electrolyte salts of imide such as cyclic lithium 1,2- perfluoroethylene disulphide imide, cyclic lithium 1,3- perfluoropropane disulphide imide and $LiN(CF_3SO_2)(C_4F_9SO_2)$, etc; electrolyte salts of methyl such as $LiC(FSO_2)_3$, $LiC(CF_3SO_2)_3$, $LiC(C_2F_5SO_2)_3$, etc; electrolyte salts of oxalic acid
such as lithium difluoro oxalate borate, lithium bis (oxalate) borate, lithium tetrafluorooxalate phosphate, lithium difluoro bis (oxalate) phosphatee, and lithium tri (oxalate) phosphate., etc; and fluorine-containing organic electrolyte salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, $LiBF_2(C_2F_5SO_2)_2$, etc.

Generally, the electrolyte salt in the electrolyte is the lithium ion transfer unit, and the concentration of the electrolyte salt directly affects the lithium ion transfer speed, and the lithium ion transfer speed would affect the potential change of the negative electrode. In the process of fast battery charging, it is necessary to improve the moving speed of lithium ions as much as possible to prevent the formation of lithium dendrites caused by the rapid decrease of negative potential, which brings potential safety hazards to the battery, and at the same time, it can prevent the cycle capacity of the battery from fading too fast. Preferably, the total concentration of the electrolyte salt in the electrolyte may be 0.5mol/L-2 .0mol/L, 0.5mol/L-0.6mol/L, 0.6mol/L-0.7mol/L, 0.7mol/L-0.8mol/L, 0.8mol/L-0.9mol/L, 0.9mol/L-1.0mol/L, 1.0mol/L-1.1mol/L, 1.1mol/L-1.2mol/L, 1.2mol/L-1.3mol/L, 1.3mol/L-1.4mol/L, 1.4mol/L-1.5mol/L, 1.5mol/L-1.6mol/L, 1.6mol/L-1.7mol/L, 1.7mol/L-1.8mol/L, 1.8mol/L-1.9mol/L or 1.9mol/L-2 .0mol/L. More preferably, it may be 0.6mol/L-1.8mol/L, 0.7mol/L-1.7mol/L or 0.8mol/L-1.5mol/L.

In some embodiments, the non-aqueous electrolyte may includes other solvents, such as ether solvent, nitrile solvent, carbonate solvent and the like.

In some embodiments, the ether solvent includes cyclic ether or chain ether, preferably chain ether with 3-10 carbon atoms and cyclic ether with 3-6 carbon atoms, and the specific cyclic ether may be but are not limited to 1,3-dioxolane (DOL), 1,4-dioxooxane (DX), crown ether, tetrahydrofuran (THF), 2-methyltetrahydrofuran (2-$CH_3$-THF) and 2-trifluoromethyltetrahydrofuran (2-$CF_3$-THF). Specifically, the chain ether may be but not limited to dimethoxymethane, diethoxymethane, ethoxymethoxymethane, ethylene glycol di-n-propyl ether, ethylene glycol di-n-butyl ether and diethylene glycol dimethyl ether. Because of the high solvation energy of chain ether and lithium ion, which can improve ion dissociation, dimethoxymethane, diethoxymethane and ethoxymethoxymethane with low viscosity and high ion conductivity are particularly preferred. Ether compounds can be used singly or in any combination and ratio. The addition amount of ether compound is not particularly limited, as long as it is within a range that does not significantly damage the effect of the high compaction density battery of the present application. The volume ratio of the non-aqueous solvent is usually above 1%, preferably above 2%, more preferably above 3%, and generally below 30%, preferably below 25%, and more preferably below 20%. When two or more ether compounds are used in combination, the total amount of ether compounds

should meet the above range. When the addition amount of ether compound is within the above preferred range, it is likely to ensure the improvement effect of ionic conductivity caused by the increase of lithium ion dissociation degree and the decrease of viscosity of chain ether. In addition, when the negative electrode active material is a carbon material, the co-embedding of chain ether and lithium ion can be suppressed, so that the characteristics of input-output and charge-discharge rate can reach appropriate ranges.

In some embodiments, the nitrile solvent may be, but is not limited to, one or more of acetonitrile, glutaronitrile and malononitrile.

In some embodiments, the carbonate solvent includes a cyclic carbonate or a chain carbonate. The cyclic carbonate may be but not limited to one or more of ethylene carbonate (EC), propene carbonate (PC), γ-butyrolactone (GBL) and butylene carbonate (BC). The chain carbonate may be but not limited to one or more of dimethyl carbonate (DMC), ethyl methyl carbonate (EMC), diethyl carbonate (DEC) and dipropyl carbonate (DPC). The content of cyclic carbonate is not particularly limited, as long as it is within a range that does not significantly damage the effect of the lithium ion battery of the present application, but the lower limit of its content is usually 3% or more by volume, preferably 5% or more by volume, relative to the total amount of solvent in the non-aqueous electrolyte. Within this range, the decrease of conductivity due to the decrease of dielectric constant of non-aqueous electrolyte can be avoided, and it is likely to achieve good results in high current discharge characteristics, stability relative to the negative electrode and cycle characteristics of non-aqueous electrolyte batteries. The upper limit is usually 90% or less by volume, preferably 85% or less by volume, and more preferably 80% or less by volume. Within this range, the oxidation/reduction resistance of non-aqueous electrolyte can be improved, which is helpful to improve the stability during high temperature storage. The content of the chain carbonate is not particularly limited, and it is usually 15% or more by volume, preferably 20% or more by volume, and more preferably 25% or more by volume, relative to the total amount of the solvent in the non-aqueous electrolyte. In addition, the volume ratio is usually 90% or less, preferably 85% or less, and more preferably 80% or less. The chain carbonate content in the above range is likely to make the viscosity of non-aqueous electrolyte reach an appropriate range, inhibit the decrease of ionic conductivity, and further help to achieve good output characteristics of non-aqueous electrolyte batteries. When two or more chain carbonates are used in combination, the total amount of chain carbonates should meet the above range.

In some embodiments, it is also preferable to use chain carbonate with fluorine atoms (hereinafter referred to as "fluorinated chain carbonate"). The number of fluorine atoms in the fluorinated chain carbonate is not particularly limited as long as it is 1 or more, but it is usually 6 or less, preferably 4 or less. When the fluorinated chain carbonate has a plurality of fluorine atoms, these fluorine atoms may be bonded to the same carbon or to different carbons. Examples of fluorinated chain carbonates include fluorinated dimethyl carbonate derivative, fluorinated methyl ethyl carbonate derivative and fluorinated diethyl carbonate derivative.

The carboxylate solvent includes cyclic carboxylate and/or chain carbonate. Examples of cyclic carboxylates include one or more of γ-butyrolactone, γ-valerolactone and δ-valerolactone. Examples of the chain carbonate include one or more of methyl acetate (MA), ethyl acetate (EA), n-propyl acetate (EP), butyl acetate, propyl propionate (PP) and butyl propionate.

In some embodiments, sulfone solvents include cyclic sulfones and chain sulfones. Preferably, in the case of cyclic sulfones, it is usually a compound with 3-6 carbon atoms, preferably 3-5 carbon atoms, and in the case of chain sulfones, it is usually a compound with 2-6 carbon atoms, preferably 2-5 carbon atoms. The addition amount of sulfone solvent is not particularly limited, as long as it is within the range that does not significantly damage the effect of the lithium ion battery of the present application. The volume ratio is usually 0.3% or more, preferably 0.5% or more, more preferably 1% or more, and generally 40% or less, preferably 35% or less, and more preferably 30% or less, relative to the total amount of solvent in the non-aqueous electrolyte. When two or more sulfone solvents are used in combination, the total amount of sulfone solvents should meet the above range. When the addition amount of sulfone solvent is within the above range, it tends to obtain electrolyte with excellent high temperature storage stability.

In some embodiments, the battery further comprises a separator, and the separator is positioned between the positive electrode and the negative electrode.

The separator may be an existing conventional diaphragm, a polymer diaphragm, a non-woven fabric and the like, including but not limited to single-layer PP (polypropylene), single-layer PE (polyethylene), double-layer PP/PE, double-layer PP/PP and triple-layer PP/PE/PP and the like.

The present application will be further illustrated by embodiments.

The compounds represented by structural formula 1 used in the following embodiments are shown in the following table.

| | | | |
|---|---|---|---|
| Compound 1 | 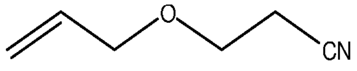 | Compound 2 | 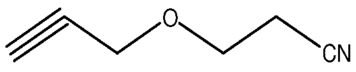 |

(continued)

| | | | |
|---|---|---|---|
| Compound 3 | 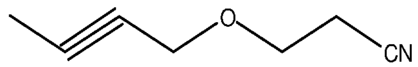 | Compound 5 | 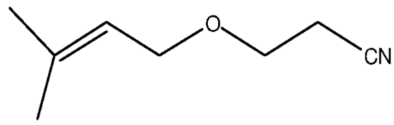 |
| Compound 6 | 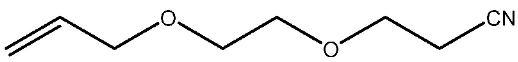 | | |

Table 1 Parameters of Embodiments and Comparative examples

| | Compounds represented by structural formula 1 | The proportion of the compound represented by structural formula 1 in the electrolyte is m/% | The proportion of carboxylate in electrolyte is x/% | Supplemental additive | Mg content in negative electrode z/ppm | m/x | m/z |
|---|---|---|---|---|---|---|---|
| Embodiment 1 | Compound 1 | 0.1 | 20 | / | 5 | 0.0050 | 0.0200 |
| Embodiment 2 | Compound 1 | 0.1 | 5 | / | 95 | 0.0200 | 0.0011 |
| Embodiment 3 | Compound 1 | 0.2 | 30 | / | 61 | 0.0067 | 0.0033 |
| Embodiment 4 | Compound 1 | 0.2 | 40 | / | 197 | 0.0050 | 0.0010 |
| Embodiment 5 | Compound 1 | 0.5 | 20 | / | 108 | 0.0250 | 0.0046 |
| Embodiment 6 | Compound 1 | 0.5 | 60 | / | 294 | 0.0083 | 0.0017 |
| Embodiment 7 | Compound 1 | 0.8 | 10 | / | 95 | 0.0800 | 0.0084 |
| Embodiment 8 | Compound 1 | 0.8 | 30 | / | 103 | 0.0267 | 0.0078 |
| Embodiment 9 | Compound 1 | 0.8 | 30 | / | 401 | 0.0267 | 0.0020 |
| Embodiment 10 | Compound 1 | 1 | 30 | / | 410 | 0.0333 | 0.0024 |
| Embodiment 11 | Compound 1 | 1 | 40 | / | 204 | 0.0250 | 0.0049 |
| Embodiment 12 | Compound 1 | 1.2 | 10 | / | 52 | 0.1200 | 0.0231 |
| Embodiment 13 | Compound 1 | 1.2 | 30 | / | 534 | 0.0400 | 0.0022 |
| Embodiment 14 | Compound 1 | 1.5 | 40 | / | 208 | 0.0375 | 0.0072 |
| Embodiment 16 | Compound 1 | 1.5 | 30 | / | 143 | 0.0500 | 0.0105 |

(continued)

| | Compounds represented by structural formula 1 | The proportion of the compound represented by structural formula 1 in the electrolyte is m/% | The proportion of carboxylate in electrolyte is x/% | Supplemental additive | Mg content in negative electrode z/ppm | m/x | m/z |
|---|---|---|---|---|---|---|---|
| Embodiment 17 | Compound 1 | 2 | 10 | / | 107 | 0.2000 | 0.0187 |
| Embodiment 18 | Compound 1 | 2 | 40 | / | 203 | 0.0500 | 0.0099 |
| Embodiment 19 | Compound 1 | 2.5 | 30 | / | 209 | 0.0833 | 0.0120 |
| Embodiment 20 | Compound 1 | 2.5 | 10 | / | 107 | 0.2500 | 0.0234 |
| Embodiment 21 | Compound 1 | 3 | 40 | / | 96 | 0.0750 | 0.0313 |
| Embodiment 22 | Compound 1 | 3 | 20 | / | 204 | 0.1500 | 0.0147 |
| Embodiment 23 | Compound 1 | 5 | 20 | / | 48 | 0.2500 | 0.1042 |
| Embodiment 24 | Compound 1 | 5 | 40 | / | 497 | 0.1250 | 0.0101 |
| Embodiment 25 | Compound 1 | 0.8 | 30 | PS 1% | 99 | 0.0267 | 0.0081 |
| Embodiment 26 | Compound 1 | 0.8 | 30 | DTD 1% | 101 | 0.0267 | 0.0079 |
| Embodiment 27 | Compound 1 | 0.8 | 30 | VC 1% | 103 | 0.0267 | 0.0078 |
| Embodiment 28 | Compound 1 | 0.8 | 30 | Propargyl phosphate 1% | 97 | 0.0267 | 0.0082 |
| Embodiment 29 | Compound 2 | 0.8 | 30 | / | 106 | 0.0267 | 0.0075 |
| Embodiment 30 | Compound 5 | 0.8 | 30 | / | 101 | 0.0267 | 0.0079 |
| Embodiment 31 | Compound 6 | 0.8 | 30 | / | 100 | 0.0267 | 0.0080 |
| Comparative example 1 | Compound 1 | / | 30 | / | 99 | / | / |
| Comparative example 2 | Compound 1 | 0.8 | / | / | 108 | / | 0.0074 |
| Comparative example 3 | Compound 1 | 0.8 | 30 | / | / | 0.0267 | / |
| Comparative example 4 | Compound 1 | 0.5 | 50 | / | 634 | 0.0100 | 0.0008 |

(continued)

| | Compounds represented by structural formula 1 | The proportion of the compound represented by structural formula 1 in the electrolyte is m/% | The proportion of carboxylate in electrolyte is x/% | Supplemental additive | Mg content in negative electrode z/ppm | m/x | m/z |
|---|---|---|---|---|---|---|---|
| Comparative example 5 | Compound 1 | 3 | 10 | / | 204 | 0.3000 | 0.0147 |
| Comparative example 6 | Compound 1 | 0.1 | 10 | / | 312 | 0.0100 | 0.0003 |
| Comparative example 8 | Compound 1 | 0.1 | 70 | / | 301 | 0.0014 | 0.0003 |
| Comparative example 7 | Compound 1 | 5 | 10 | / | 99 | 0.5000 | 0.0500 |
| Comparative example 9 | Compound 1 | 5 | 40 | / | 41 | 0.1250 | 0.1250 |

Embodiment 1

The embodiment is used to illustrate the disclosed battery and preparation method, including the following steps.

(1) Preparation of positive plate

The positive active material containing Mg, the conductive agent and the bind PVDF were dispersed into solvent NMP, and uniformly mixed to obtain a positive electrode slurry. The positive electrode slurry was evenly coated on the aluminum foil of positive electrode current collector, then dried, calendered and cut to obtain a positive electrode plate. The mass ratio of positive electrode active material, conductive carbon black and binder PVDF was 96:2:2.

(2) Preparation of negative plate

The negative electrode active material graphite, conductive agent, binder CMC and SBR were dispersed in deionized water according to the mass ratio of 96:1:1:2 and stirred to obtain a positive electrode slurry. The negative electrode slurry was evenly coated on the copper foil of the negative electrode current collector, then dried, calendered and cut to obtain a negative electrode plate with a compaction density of $1.6g/cm^3$.

(3) Preparation of electrolyte

Ethyl propionate, ethylene carbonate (EC) and diethyl carbonate (DEC) were evenly mixed according to the mass ratio of 20:30:50, and 1mol/L of $LiPF_6$ and 0.1wt%% of the compound represented by structural formula 1 in the electrolyte were dissolved in the above non-aqueous organic solvent to obtain an electrolyte.

(4) Preparation of lithium ion battery

The positive plate, separator and negative plate were laminated in sequence by lamination process, and then a pouch battery was made after top-side sealing and injecting a certain amount of electrolyte. The prepared pouch battery was formed and divided into volumes, and then disassembled. The negative plate was taken out separately. 1g of negative plate powder was scraped with a blade, the sample was sent for ICP element analysis, and the Mg content was tested. The results are shown in Table 1, the unit is ppm.

Embodiments 2-31

Embodiments 2-31 are used to illustrate the disclosed battery and preparation method, including most of the steps of Embodiment, except that:
the electrolyte components shown in Table 1 were added.

Comparative examples 1-9

Comparative examples 1-9 are used to illustrate the disclosed battery and preparation method, including most of the steps of Embodiment, except that:
the electrolyte components shown in Table 1 were added.

Performancetests

The following performance tests were conducted on the lithium ion battery prepared above.

1. The formed battery was charged to the cut-off voltage at room temperature with a constant current of 1C, then charged at a constant current and constant voltage until the current dropped to 0.05C, then discharged at a constant current of 1C to 3.0V. The initial discharge capacity (D1) of the battery was measured. And then discharged at 1C to 3V after it is fully charged and stored at 85°C for 48h, and the retention capacity (D2) of the battery was measured. The calculation formula is as follows.

$$\text{Capacity retention rate (\%)} = \text{Retention capacity (D2)/ Initial discharge capacity (D1)} \times 100\%.$$

2. The battery was put in a high-temperature oven with a constant temperature of 45°C, charged to the cut-off voltage with a constant current of 0.5C, then charged at a constant voltage until the current dropped to 0.02C. After the battery was left for 5 minutes, it was discharged to 3.0V at a constant current of 1C, which was the first cycle. According to the above conditions, 500 cycles of charge/discharge were performed, and the impedance growth rate of the battery after the 500th cycle at 45°C was calculated.

Growth rate of battery impedance after cycle process (%) = [(Internal resistance after the nth cycle - Internal resistance after the first cycle)/ Internal resistance after the first cycle] × 100%.

3. High-temperature fast charge cycle performance test

At 45°C, the formed battery was charged to the cut-off voltage with 2C constant current and constant voltage, then charged at constant voltage until the current dropped to 0.05C, and then discharged at 2C constant current to 3.0V. This process was performed for 500 cycles, and the first discharge capacity and the last discharge capacity were recorded.
The capacity retention rate of high temperature cycle was calculated according to the following formula.

$$\text{Capacity retention rate} = \text{Last discharge capacity/ First discharge capacity} \times 100\%.$$

(1) Test results of Embodiments 1 to 24 and Comparative examples 1 to 9 are shown in Table 2.

Table 2

| | Capacity retention rate/% after the 500th cycle of fast charge at 45°C 2C/2C | Impedance growth rate/% after the 500th cycle of fast charge at 45°C 2C/2C | Capacity retention rate/% after 30 days of storage at 60°C | Capacity recovery rate/% after 30 days of storage at 60°C |
|---|---|---|---|---|
| Embodiment 1 | 85 | 93.6 | 80.1 | 80.4 |

(continued)

| | Capacity retention rate/% after the 500th cycle of fast charge at 45°C 2C/2C | Impedance growth rate/% after the 500th cycle of fast charge at 45°C 2C/2C | Capacity retention rate/% after 30 days of storage at 60°C | Capacity recovery rate/% after 30 days of storage at 60°C |
|---|---|---|---|---|
| Embodiment 2 | 86.1 | 92.1 | 81.2 | 81.7 |
| Embodiment 3 | 85.1 | 94.1 | 82.3 | 82.5 |
| Embodiment 4 | 85.1 | 94.2 | 81 | 81.5 |
| Embodiment 5 | 87.4 | 90.3 | 88.6 | 89.3 |
| Embodiment 6 | 85.4 | 93.4 | 82.1 | 82.5 |
| Embodiment 7 | 87.5 | 91.2 | 88.7 | 89.4 |
| Embodiment 8 | 90.2 | 86.2 | 89.9 | 90.6 |
| Embodiment 9 | 89.2 | 88.6 | 87.1 | 89.8 |
| Embodiment 10 | 90.3 | 90.9 | 88.3 | 88.9 |
| Embodiment 11 | 90 | 86.4 | 87.1 | 88.8 |
| Embodiment 12 | 82.4 | 100.3 | 86.9 | 87.1 |
| Embodiment 13 | 88.7 | 88.4 | 90.3 | 90.7 |
| Embodiment 14 | 87.6 | 91.3 | 91 | 91.5 |
| Embodiment 16 | 87.5 | 91.8 | 90.7 | 91.3 |
| Embodiment 17 | 80.9 | 104.9 | 87.1 | 87.4 |
| Embodiment 18 | 87.6 | 90.4 | 89.6 | 90.7 |
| Embodiment 19 | 87.2 | 90.8 | 89.7 | 90.3 |
| Embodiment 20 | 80.1 | 105.6 | 85.3 | 86.4 |
| Embodiment 21 | 81.7 | 103.2 | 84.2 | 84.7 |
| Embodiment 22 | 83.6 | 96.7 | 83.4 | 84.2 |

(continued)

| | Capacity retention rate/% after the 500th cycle of fast charge at 45°C 2C/2C | Impedance growth rate/% after the 500th cycle of fast charge at 45°C 2C/2C | Capacity retention rate/% after 30 days of storage at 60°C | Capacity recovery rate/% after 30 days of storage at 60°C |
|---|---|---|---|---|
| Embodiment 23 | 79.1 | 105.1 | 80.8 | 81.6 |
| Embodiment 24 | 81.5 | 97.8 | 82.9 | 82.3 |
| Comparative example 1 | 70.4 | 190.2 | 67.3 | 68.2 |
| Comparative example 2 | 76.4 | 130.3 | 75.2 | 76 |
| Comparative example 3 | 73.2 | 150.3 | 74.5 | 75.3 |
| Comparative example 4 | 77.5 | 140.1 | 73.2 | 73.6 |
| Comparative example 5 | 72.3 | 177.6 | 76.3 | 76.8 |
| Comparative example 6 | 73.7 | 180.2 | 71.5 | 71.9 |
| Comparative example 8 | 75.4 | 128.7 | 70.2 | 71.3 |
| Comparative example 7 | 72.2 | 143.6 | 71.8 | 72.2 |
| Comparative example 9 | 70.8 | 160.3 | 73.8 | 74.2 |

It can be seen from the test results of Embodiments 1-24 and Comparative examples 1-9, when the mass content (z) of element Mg in the negative electrode material layer, the mass content (m) of the compound represented by structural formula 1 and the carboxylate content (x) satisfy the conditions of $0.002 \leq m/x \leq 0.25$ and $0.001 \leq m/z \leq 0.1$, the lithium ion battery can have both good high-temperature storage performance and good fast charge cycle performance.However, too large or too small m/x and m/z values are not conducive to the improvement of high-temperature storage performance and the reduction of fast charge cycle impedance.

Comparing the test results of Embodiments 1-24, it can be seen that the lithium-ion battery has the best overall performance when the conditions of $0.005 \leq m/x \leq 0.1$ and $0.001 \leq m/z \leq 0.02$ are satisfied.

(3) The test results of Embodiments 8, 25-28 are shown in Table 3.

Table 3

| | Capacity retention rate/% after the 500th cycle of fast charge at 45°C 2C/2C | Impedance growth rate/% of fast charge cycle at 45°C 2C/2C | Capacity retention rate/% after 30 days of storage at 60°C | Capacity recovery rate/% after 30 days of storage at 60°C |
|---|---|---|---|---|
| Embodiment 8 | 90.2 | 86.2 | 89.9 | 90.6 |
| Embodiment 25 | 91.6 | 88.3 | 91.3 | 91.9 |
| Embodiment 26 | 91.8 | 83.6 | 91 | 91.4 |

(continued)

| | Capacity retention rate/% after the 500th cycle of fast charge at 45°C 2C/2C | Impedance growth rate/% of fast charge cycle at 45°C 2C/2C | Capacity retention rate/% after 30 days of storage at 60°C | Capacity recovery rate/% after 30 days of storage at 60°C |
|---|---|---|---|---|
| Embodiment 27 | 91.3 | 84.2 | 89.7 | 90.2 |
| Embodiment 28 | 91.7 | 85.6 | 91.2 | 91.6 |

It can be seen from the test results of Embodiment 8 and Comparative examples 25-28, for the battery provided by the present application, adding PS(1,3- propane sultone), DTD (Dioxathiolane 2,2-dioxide), VC (vinyl carbonate) or triallyl phosphate as supplemental additives can further improve the high-temperature storage performance and fast charge cycle performance of battery. It is speculated that there is a certain co-decomposition reaction between the represented by structural formula 1, carboxylate and PS(1,3- propane sultone), DTD (Dioxathiolane 2,2-dioxide), VC (vinyl carbonate) or triallyl phosphate, which can jointly participate in the formation of the passivation film on the electrode surface. And the obtained passivation film can improve the stability of the electrode material and maintain the stability of the battery cycle and the high current resistance.

(3) The test results of Embodiments 8, 29-31 are shown in Table 4.

Table 4

| | Capacity retention rate/% after the 500th cycle of fast charge at 45°C 2C/2C | Impedance growth rate/% of fast charge cycle at 45°C 2C/2C | Capacity retention rate/% after 30 days of storage at 60°C | Capacity recovery rate/% after 30 days of storage at 60°C |
|---|---|---|---|---|
| Embodiment 8 | 90.2 | 86.2 | 89.9 | 90.6 |
| Embodiment 29 | 90.3 | 86.1 | 89.7 | 90.3 |
| Embodiment 30 | 90.4 | 85.4 | 90.2 | 90.4 |
| Embodiment 31 | 89.9 | 87.8 | 88.4 | 88.9 |

It can be seen from the test results of Embodiment 8 and Comparative Examples 29-31, when other compounds represented by structural formula 1 such as Compound 2, Compound 5 and Compound 6 are used as additives of non-aqueous electrolyte, the conditions of $0.002 \leq m/x \leq 0.25$ and $0.001 \leq m/z \leq 0.1$ are also satisfied. It indicates that the above conditions of relation expressions provided by the present application are applicable for different compounds represented by structural formula 1. It can improve both the high-temperature storage performance and fast charge cycle performance of lithium ion batteries.

The above descriptions are merely preferred embodiments and are not intended to limit the present application. Any modifications, equivalent substitutions and improvements made within the spirit and principles of the present application shall be included within the scope of protection of the present application. Further, unless otherwise required by context, singular terms shall include pluralities and plural terms shall include the singular.

## Claims

1. A lithium ion battery, comprising a positive electrode containing a positive electrode material layer, a negative electrode containing a negative electrode material layer, and a non-aqueous electrolyte, wherein the positive electrode material layer comprises a lithium transition metal oxide containing magnesium as a positive electrode active material, the negative electrode material layer comprises a negative electrode active material and a magnesium-containing compound, and the non-aqueous electrolyte comprises a carboxylate solvent, an electrolyte salt and a compound represented by structural formula 1:

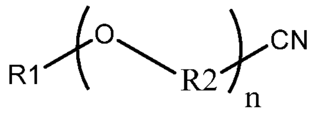

Structural formula 1

wherein R1 is selected from an unsaturated hydrocarbon group with 3-6 carbon atoms, R2 is selected from an alkylene group with 2-5 carbon atoms, and n is 1 or 2;
the lithium ion battery satisfies the following conditions:

$$0.002 \leq m/x \leq 0.25 \text{ and } 0.001 \leq m/z \leq 0.1;$$

wherein, x is a mass percentage of carboxylate in the non-aqueous electrolyte, and the unit is %;
m is a mass percentage of the compound represented by structural formula 1 in the non-aqueous electrolyte, and the unit is %;
z is a mass content of element Mg relative to the negative electrode material layer, and the unit is ppm.

2. The lithium ion battery of claim 1, wherein the lithium ion battery satisfies the following conditions:

$$0.005 \leq m/x \leq 0.1 \text{ and } 0.001 \leq m/z \leq 0.02.$$

3. The lithium ion battery of claim 1, wherein the compound represented by structural formula 1 is selected from one or more of the following compounds:

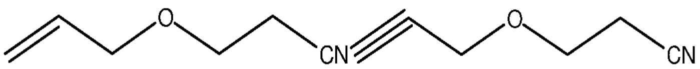

Compound 1 Compound 2

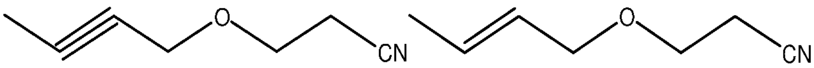

Compound 3 Compound 4

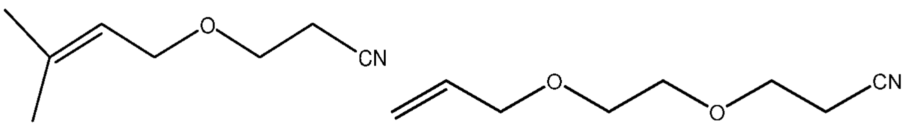

Compound 5 Compound 6

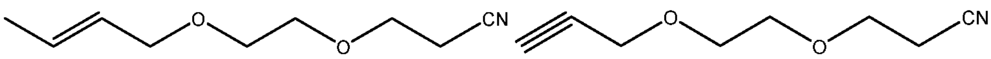

Compound 7Compound 8.

4. The lithium ion battery of claim 1, wherein the mass percentage (m) of the compound represented by structural formula 1 in the non-aqueous electrolyte is 0.1-5%.

5. The lithium ion battery of claim 4, wherein the mass percentage (m) of the compound represented by structural formula 1 in the non-aqueous electrolyte is 0.1-2%.

6. The lithium ion battery of claim 1, wherein the mass content (z) of element Mg relative to the negative electrode

material layer is 5-500ppm.

7. The lithium ion battery of claim 6, wherein the mass content (z) of element Mg relative to the negative electrode material layer is 50-500ppm.

8. The lithium ion battery of claim 1, wherein the mass percentage (x) of carboxylate in the non-aqueous electrolyte is 5-55%.

9. The lithium ion battery of claim 8, wherein the mass percentage (x) of carboxylate in the non-aqueous electrolyte is 10-40%.

10. The lithium ion battery of claim 1, wherein the carboxylate is at least one selected from methyl acetate, ethyl acetate, ethyl propionate, butyl acetate, propyl propionate, butyl propionate, γ-butyrolactone, γ-valerolactone and δ-valerolactone.

11. The lithium ion battery of claim 1, wherein the compaction density of the negative electrode material layer is greater than or equal to 1.5g/$cm^3$.

12. The lithium ion battery of claim 11, wherein the compaction density of the negative electrode material layer is 1.55-1.9g/$cm^3$.

13. The lithium ion battery of claim 1, wherein the non-aqueous electrolyte further comprises a supplemental additive, and the supplemental additive comprises at least one of cyclic sulfate compound, sultone compound, cyclic carbonate compound, unsaturated phosphate compound and nitrile compound.

14. The lithium ion battery of claim 13, wherein an addition amount of the supplemental additive is 0.01%-30% based on the total mass of the non-aqueous electrolyte being 100%.

15. The lithium ion battery of claim 13, wherein the cyclic sulfate compound is selected from at least one of ethylene sulfate, propylene sulfate or methyl ethylene sulfate;

the sultone compound is selected from one or more of 1,3-propane sultone, 1,4-butane sultone, and 1,3-propene sultone; and

the cyclic carbonate compound is selected from at least one of vinylene carbonate, vinylethylene carbonate, fluoroethylene carbonate or a compound represented by structural formula 2;

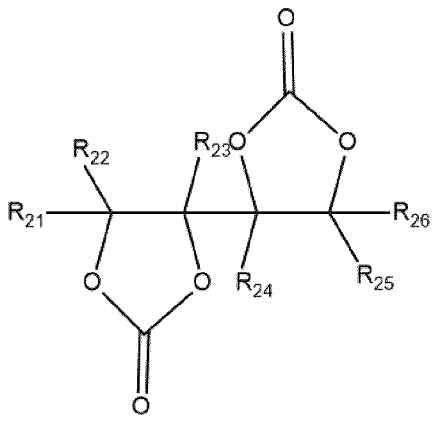

Structural formula 2

in structural formula 2, $R_{21}$, $R_{22}$, $R_{23}$, $R_{24}$, $R_{25}$ and $R_{26}$ are each independently selected from one of hydrogen atom, halogen atom and C1-C5 group;

the unsaturated phosphate compound is selected from at least one compound represented by structural formula 3:

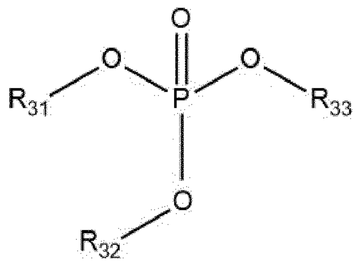

Structural formula 3

in structural formula 3, $R_{31}$, $R_{32}$ and $R_{33}$ are each independently selected from a C1-C5 saturated hydrocarbon group, a C1-C5 unsaturated hydrocarbon group, a C1-C5 halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group; and the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

**INTERNATIONAL SEARCH REPORT**

International application No.
**PCT/CN2022/132198**

**A. CLASSIFICATION OF SUBJECT MATTER**

H01M 10/0567(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT, STN: 负极, 阳极, 羧酸酯, 镁, mg, negative electrode, anode, carboxylate, magnesium

**C. DOCUMENTS CONSIDERED TO BE RELEVANT**

| Category* | Citation of document, with indication, where appropriate, of the relevant passages | Relevant to claim No. |
|---|---|---|
| PX | CN 114361588 A (SHENZHEN CAPCHEM TECHNOLOGY CO., LTD.) 15 April 2022 (2022-04-15)<br>description, paragraphs [0005]-[0151] | 1-15 |
| Y | JP 2018163867 A (MITSUBISHI CHEMICAL CORP.) 18 October 2018 (2018-10-18)<br>description, paragraphs [0008]-[0401] | 1-15 |
| Y | CN 105990565 A (BYD CO., LTD.) 05 October 2016 (2016-10-05)<br>description, paragraphs [0004]-[0050] | 1-15 |
| Y | JP 2000164249 A (MITSUI CHEMICALS INC.) 16 June 2000 (2000-06-16)<br>description, paragraphs [0009]-[0048] | 3 |
| Y | CN 105428717 A (SHENZHEN CAPCHEM TECHNOLOGY CO., LTD.) 23 March 2016 (2016-03-23)<br>description, paragraphs [0005]-[0154] | 1-15 |
| A | CN 113659206 A (SHENZHEN CAPCHEM TECHNOLOGY CO., LTD.) 16 November 2021 (2021-11-16)<br>entire document | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 January 2023** | **18 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/132198**

| Patent document cited in search report | | | Publication date (day/month/year) | Patent family member(s) | | | Publication date (day/month/year) |
|---|---|---|---|---|---|---|---|
| CN | 114361588 | A | 15 April 2022 | None | | | |
| JP | 2018163867 | A | 18 October 2018 | JP | 6769371 | B2 | 14 October 2020 |
| CN | 105990565 | A | 05 October 2016 | None | | | |
| JP | 2000164249 | A | 16 June 2000 | None | | | |
| CN | 105428717 | A | 23 March 2016 | US | 2018076488 | A1 | 15 March 2018 |
| | | | | WO | 2017101141 | A1 | 22 June 2017 |
| | | | | JP | 2018514070 | A | 31 May 2018 |
| | | | | JP | 6549249 | B2 | 24 July 2019 |
| | | | | US | 10530016 | B2 | 07 January 2020 |
| CN | 113659206 | A | 16 November 2021 | None | | | |

Form PCT/ISA/210 (patent family annex) (January 2015)